# EUROPEAN PATENT APPLICATION

(11) **EP 1 478 037 A2**
(43) Date of publication of application: **17.11.2004**
(21) Application number: 04252843.0
(22) Date of filing: 17.05.2004
(51) Int. Cl.: H01M 4/04, H01M 4/32, H01M 4/66, H01M 4/80

(54) **Secondary battery using non-sintered thin electrode and process for same**

(30) Priority: 16.05.2003 JP 2003139433
(71) Applicant: M&G Eco-Battery Institute Co., Ltd., Osaka-shi, Osaka-fu (JP)
(72) Inventor: Matsumoto, Isao, M&G Eco-Battery Instiute Co., Ltd, Kita-ku Osaka-shi Osaka-fu (JP); Kawano, Hiroshi, M&G Eco-Battery Instiute Co., Ltd, Kita-ku Osaka-shi Osaka-fu (JP); Ikeyama, M. M&G Eco-Battery Instiute Co., Ltd., Kita-ku Osaka-shi Osaka-fu (JP); Aoki, Keisuke M&G Eco-Battery Instiute Co., Ltd., Kita-ku Osaka-shi Osaka-fu (JP)
(74) Representative: Scott, Susan Margaret

(57) **Abstract**

The present invention provides batteries with low cost, excellent in high rate discharge characteristics (high power characteristics) and high reliability. For example, the present invention provides Ni/MH batteries with low cost, excellent in high rate discharge characteristics (high power characteristics) and high reliability. The batteries of the present invention are obtained by applying the conductive electrode substrate obtained by the following method to a positive electrode and /or a negative electrode and by combining these electrodes with a separator which is much thinner than conventional separators. The conductive electrode substrate which is made three dimensional is obtained by forming innumerable bridge structural portions on both sides of a nickel foil, having no burr on the apparent surface of said three dimensional substrate. The same type of substrate made of Al and Cu foil are applicable for a Li secondary battery system positive and negative electrodes, respectively.

## Description

### Field of Invention

The present invention relates to a battery in which the cost is reduced, and the high rate discharge characteristics and the cycle life are improved. In particular, the present invention relates to a non-sintered thin electrode for secondary batteries and batteries using the electrode.

### Background of the Invention

Recently, the number of requirement has been increasing for the small size secondary batteries with low cost first, and then with high energy density and with high power, etc. In many cases, non-sintered thin electrodes having the characteristics of low cost, light weight, and high energy are employed for both positive and negative electrodes in Ni/Cd batteries, Ni/MH batteries, and Li secondary batteries which are mainly used in the market. However, it is still difficult for non-sintered thin electrodes to satisfy all the requirements at the same time, which are low in cost, high in energy density, and high in power. Therefore, from the view point of explaining specific non-sintered thin electrodes and batteries using the electrodes, hereinafter detailed explanation is focused on small sized sealed cylindrical nickel metal-hydride (Ni/MH) batteries as examples to explain non-sintered electrode art and the application thereof by focusing on non-sintered nickel positive electrodes for the alkaline storage batteries. Generally speaking, secondary batteries have a problem that powders of active materials or pseudo active materials on the electrodes shed off as a whole electrode expands by repeated expansion-contraction of the powders during charge and discharge. The pseudo active materials are materials which absorb/de-sorb active materials such as Hydrogen and Lithium. Therefore, technical difficulty accompanies in the typical non-sintered electrodes in which a two dimensional substrate is coated with these powders and a binder. In particular, active materials for positive electrodes have poor conductivity as well as poor binding property among powders. Therefore, there are many things to be improved for the application of a non-sintered electrode. On the other hand, materials for negative electrodes have good conductivity since metals are main materials. Preparation of non-sintered negative electrode is easier compared with preparation of non-sintered positive electrode by the selection of appropriate binders. Therefore, an explanation goes hereinafter focusing on a positive electrode of Ni/MH batteries. Main materials of the positive electrode are powders of nickel oxide (Ni(OH)₂) which have poor conductivity and poor binding property among powders, as mentioned above. Therefore, application for non-sintered electrodes has been difficult, however, as proposed by inventors, by using a foamed nickel substrate and a nickel fiber substrate having three dimensional expanse, non-sintered electrodes filled in high density which have high energy density and high reliability are utilized (here, abbreviated as a 3 DM type as a general term). The above proposal by the inventors of this application is disclosed in a non patent document "Ni-Fe Battery" in an extended abstract, ECS fall meeting (Isao Matsumoto and other two, 1982, p18-19) and in a patent gazette (US Patent No. 4251603). However, this 3 DM type still has several technical problems. Since a substrate to be used is expensive, it is difficult to realize good cost performance which is an important characteristic of a non-sintered electrode. The substrate has poor mechanical strength. Further, since pores in the substrate have large diameter, the electrode has relatively low electrical conductivity as a whole. Here, poor mechanical strength means that cracking occurs easily during the process of preparing a spirally rolled electrode and a part of a cracked substrate may break through a separator, causing a microscopic short circuit. In other words, inevitably there is a limit in employing a thin separator with an electrode of 3DM type. In addition, a large pore diameter in a substrate by structure means that the conventional weakness in high power characteristics of a non-sintered electrode cannot be overcome enough since amount of reaction on the filling active materials in a center part of a pore becomes lower. Therefore, as new development of an electrode substrate for obtaining mechanical strength and high power characteristics keeping cost low, the following four methods are proposed. In the proposal, improvement in a two-dimensional electrode substrate which has been difficult in the past and a new substrate are suggested. At the same time, preparation of a thinner electrode suitable for the high power usage is also aimed.
1) Adhering innumerable capillaceous or canalicular metals to perforated metal sheets such as punched metals. (US Patent No. 5840444)
2) Opening many holes and providing burrs at the same time on a metal plate. (US Patent No. 5543250)
3) Processing a metal plate into a corrugated form, thereby making the plate three dimensional. As required, pores with burr are provided in edges of corrugated concavities and convexities, thereby supplementing three dimension. (US Patent No. 5824435)
4) Making a metal foil three dimensional by providing hollow concavities and convexities having apertures at leading edges (Publication of unexamined Japanese application No. 2002-198055 and Publication of unexamined US application No. 2002-0025475)

However, in 1), there still have characteristic problems including weakness of binding strength between capillaceous or canalicular metals and base metal sheets and unevenness in paste filling due to the inability for the substrate to have uniform pores. Further, 1) causes higher cost than conventional batteries. In 2), since the level of a three dimensional structure is not enough, retention property and charge and discharge characteristics deteriorate. In 3), these problems are quite improved and cost performance can be expected. However, there still remain some problems as follows. First, since electrodes extend in a wave direction of a corrugated form during a press-work process, it is difficult to keep a desirable three dimensional substrate form. Second, active materials easily shed off from the substrate when electrodes are spirally formed and when charging and discharging are repeated. Therefore, the inventors of this application proposed 4). However, there still have some problems. First, projections may cause a microscopic short circuit when a separator is thin. Second, electrical contact between a substrate and coating or filling active material powders is not enough and high power characteristics leaves something to be desired. The present invention in this application solves the problems in a method of the above 4). The object of the invention is to provide an electrode having high power characteristics (high rate discharge characteristics) equivalent to the merits that conventional excellent sintered electrodes and 3 DM type electrodes have. It is also the object of the invention to provide a process for producing the above electrodes.

### Summary of the invention

In order to solve the above problems, the present invention relates to a battery using a non-sintered thin electrode; a conductive electrode substrate is applied for the substrate of the non-sintered electrode; the substrate having the following characteristics:
a) a conductive electrode substrate is obtained from a metal foil with an electrolyte-proof property by making three dimensional by providing a bridge structural portion with an aperture in a side part on both sides of the metal foil and
b) a conductive electrode substrate in which said bridge structural portion as a whole is inclining in one direction which is parallel to an electrode surface. With respect to the structure of above a), by employing such a structure of making concavities and convexities projecting like needles a bridge structural portion forming concavities and convexities, a microscopic short circuit which occurs when needle projection breaks through a separator can be prevented. First of all, in the present invention, for nickel positive electrodes, for example, conductive electrode substrates which were made three dimensional in a way that thickness as a whole is substantially the same as thickness of an electrode with hollow microscopic concavo-convex bridge structural portion on a nickel metallic foil can be preferably used instead of using conventional sintered substrates or foamed nickel porous substrate. The above mentioned three dimensional conductive electrode substrate can be used when the above mentioned non-sintered thin electrode is used for nickel positive electrode for alkaline storage batteries, in particular, for a thin nickel positive electrode, that is, the thickness of which is not greater than 500 µm and an electrode group. Here, an electrode group refers to a state in which single or plural of positive electrode and negative electrode are formed spirally interposing a separator therebetween. Since this conductive electrode substrate with bridge structural portions forming hollow innumerable microscopic concavities and convexities does not have any projecting parts which cause microscopic short circuit on the surface, it can enhance reliability. In addition, said conductive electrode substrate can be prepared by making it pass between rollers with surface treatment which is equivalent to said bridge structural portion forming microscopic concavities and convexities and by transcribing said bridge structural portion forming microscopic concavities and convexities. Since said conductive electrode substrate can be easily prepared by using a simple physical processing method, the cost can be kept much lower compared with a conventional electrode substrates such as foamed metal and sintered plaque.

Secondly, in the present invention, concavities and convexities of said bridge are alternately arranged so that the shortest distance between said substrate and most active material powders is not greater than 150 µm, thereby capable of improving charge and discharge reaction, in particular, high rate discharge characteristics (high power characteristics) of active material powders. In addition, protection from a shedding of active materials and the like can be enhanced. That is, high reliability can be obtained. For information, in order to improve said effects, it is more preferable that extremely microscopic concavities and convexities (around several microns from the bottom to the top) on a surface of a nickel metal foil are provided and that contact points of a conductive electrode substrate after three dimensional process (thickness: some hundred microns) and powers including filling into or coating of active materials on this substrate.

Thirdly, in the present invention, an electrode group is composed of a non-sintered thin nickel positive electrode, a hydrogen absorbing alloy negative electrode, and a separator; active materials mainly composed of Ni(OH)₂ and the like are filled into or coated on said conductive electrode substrate, pseudo-active materials mainly composed of hydrogen absorbing alloy such as MmNi₅ are filled into or coated on conventional two dimensional substrate or said conductive electrode substrate. For preferably improving high energy density of a battery, a separator used in combination with the present thin nickel positive electrode and a thin hydrogen absorbing alloy negative electrode can employ a non woven cloth composed of a polyolefin based resin fiber conducted with hydrophilic treatment, which is much thinner than the conventional non-woven cloth.

Fourthly, the present invention is also a Ni/MH battery obtained by inserting said electrode group in an cell case, filling alkaline electrolyte thereafter sealed. By using the above electrode group for a battery, cost of a thin nickel positive electrode (and hydrogen absorbing alloy negative electrode) can be kept lower, since an inexpensive conductive electrode substrate which can be processed only by a mechanical operation is used instead of using expensive sintered substrates or foamed nickel porous substrates. In addition, by making the form of an electrode substrate described as second embodiment above, low cost due to the simple manufacturing, high power can be realized.

Further, by taking measures described as firstly as above, a battery with high reliability can be obtained in addition to no microscopic short circuit. Together with this, by using the present light weight substrate, filling with high energy density of active materials can be available and due to flexibility, a crack can be prevented during spirally wound process. Therefore, a thin separator can be applied, thereby providing a battery with higher power and higher energy density. Consequently, cylindrical sealed Ni/MH batteries and prismatic Ni/MH batteries with excellent cost performance, high power characteristics (high rate of discharge characteristics) can be obtained.

### Brief description of drawing

Fig. 1 (a) is a schematic diagram of a nickel positive electrode according to one embodiment of the present invention.
Fig. 1 (b) is a schematic diagram of a nickel positive electrode according to another embodiment of the present invention.
Fig. 2 (a) is a sectional view of a surface bridge structural portion of a nickel positive electrode in Fig. 1 (b) taken along a line M-M.
Fig. 2 (b) is a sectional view of a back bridge structural portion of a nickel positive electrode in Fig. 1 (b) taken along a line N-N.
Fig. 3 is a block diagram of a cylindrical sealed Ni/MH battery (AA size) according to one embodiment of the present invention.

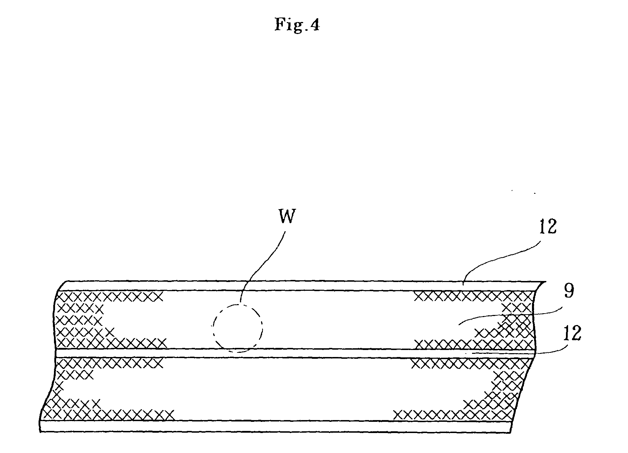

Fig. 4 is a top view of an electrode substrate having a wide belt-like form used for a nickel positive electrode according to one embodiment of the present invention.
Fig. 5 (a) is an enlarged sectional view in part of a conductive electrode substrate according to one embodiment of the present invention.
Fig. 5 (b) is an enlarged sectional view in part of Fig. 5 (a) taken along a line A-A.
Fig. 5 (c) is an enlarged sectional view in part of Fig. 5 (a) taken along a line B-B.
Fig. 6 (a) is an enlarged sectional view in part of a bridge structural portion forming microscopic concavities and convexities (a surface bridge) of a conductive electrode substrate forming microscopic concavities and convexities according to one embodiment of the present invention.
Fig. 6 (b) is an enlarged view in part of Fig. 6 (a).
Fig. 7 (a) is a lateral view in the press work process of a conductive electrode substrate which is made three dimensional by a bridge structural portion forming extremely microscopic concavities and convexities according to one embodiment of the present invention.
Fig. 7 (b) is an enlarged lateral view in part in the press work process of a conductive electrode substrate with extremely microscopic concavities and convexities formed in Fig.7 (a).
Fig. 7 (c) is an enlarged lateral view in part in the press work process in which a conductive electrode substrate is made three dimensional by a bridge structural portion forming microscopic concavities and convexities in Fig. 7 (a).
Fig. 8 is a paste filling process of active materials in a non-sintered nickel positive electrode according to one embodiment of a present invention.
Fig. 9 is a correlation diagram of high rate discharge characteristics of a cylindrical sealed Ni/MH battery according to one embodiment of a present invention.
Fig. 10 is a correlation diagram of cycle life characteristics of a cylindrical sealed Ni/MH battery according to one embodiment of a present invention.

### Reference numerals and letters in drawings

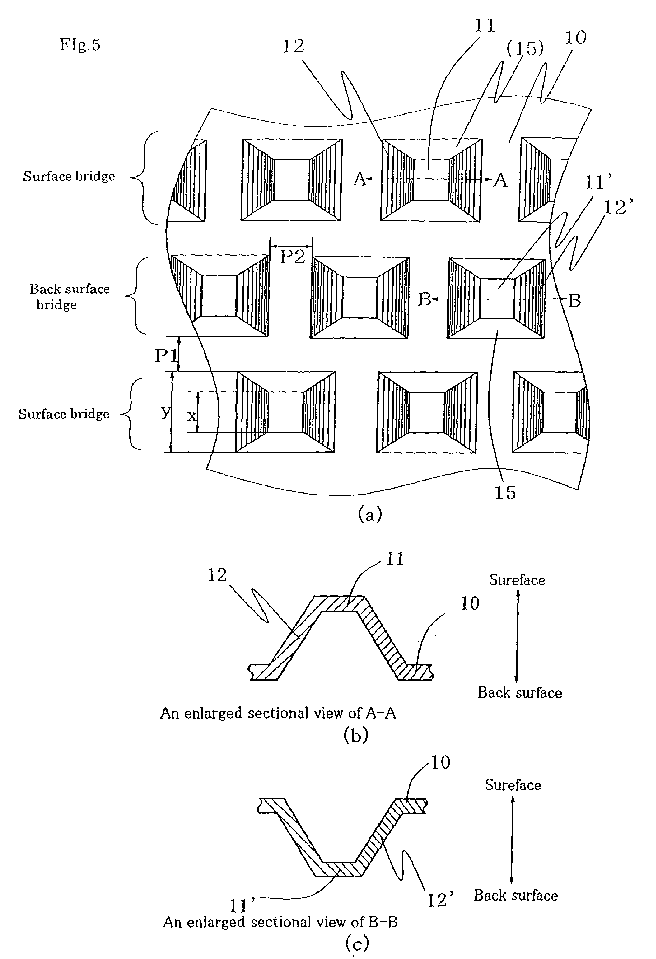

1: Nickel positive electrode
2: Hydrogen absorption alloy negative electrode
3: Separator
4: Electric bath
5: Gasket
6: Positive electrode terminal
7: Safety valve
8: Positive electrode lead terminal
9: Nickel positive electrode
10: Unprocessed part of a conductive electrode substrate
11, 11': Top side part of a surface bridge structural portion and bottom side part of a back bridge structural portion of an electrode substrate
12, 12': Inclined part of a surface bridge structural portion and a back bridge structural portion of an electrode substrate
13: Active material powder
14: Spaced part
15: Lateral aperture of a surface bridge structural portion and a back bridge structural portion
16: Nickel composing a bridge structural portion
17: Roller having a processed surface which is made extremely microscopic
18: Roller forming microscopic concavities and convexities
19: Decompression chamber (substantially vacuum)
20: Container
21: Flexible rubber
22: Water solution paste of active materials
23: Doctor blade
24, 25: Revolving roller
26: Stirring blade
27: Container
X: Processed part of a concavo-convex of an electrode substrate
Y: Re-pressed part of X
W: Part enlarged in Fig.5
Z: Extremely microscopic processed part
x: Width of a rising part of a bridge structural portion
y: Width of a rising part of a bridge structural portion
P1: Pitch of a surface bridge and a back bridge structural portion
P2: Pitch of a back bridge and a back bridge structural portion

### Detailed description of the preferred embodiments

Hereinafter, explanation goes referring to drawings. However, this invention is not limited to these embodiments.

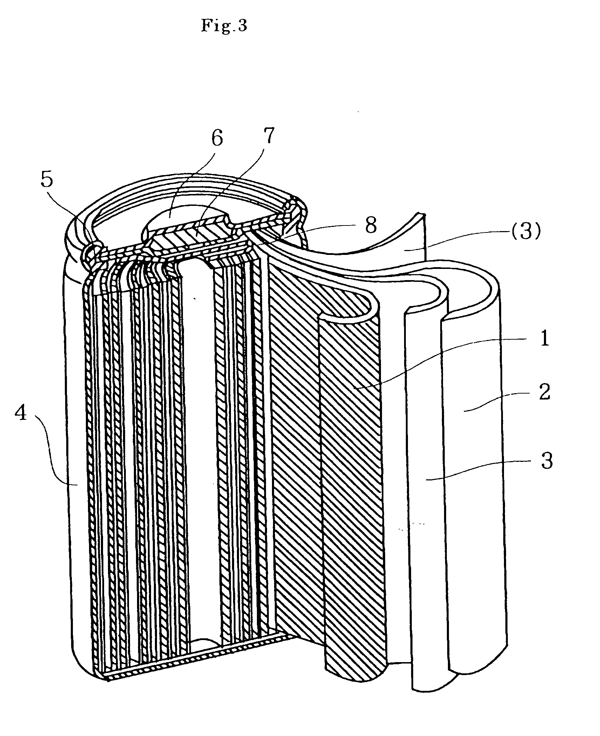

Fig.3 is a diagram representing an overview of a cylindrical sealed Ni/MH battery (AA size) according to one embodiment of the present invention. A nickel positive electrode has a thickness not greater than 500µm and is mainly composed of nickel hydroxide powder. A thickness of a hydrogen absorbing alloy negative electrode 2 is much thinner than the thickness of the positive electrode and the alloy negative electrode 2 is mainly composed of hydrogen absorption alloy powders. A separator 3 is made of a non-woven sheet of polyolefin synthetic resin fiber with hydrophilic treatment. An electrode group obtained by winding a nickel positive electrode 1 and an alloy negative electrode 2 interposing a separator 3 therebetween is inserted into a cylindrical metal case 4 and then an alkaline electrolyte mainly composed of KOH solution is filled in the metal case, which is then sealed, thereby obtaining a sealed cylindrical nickel/hydride battery.

In Fig. 3, a sealed cylindrical nickel/hydride battery is represented as an example. However, in the case of a prismatic electrode group in which each of similar several rectangular positive electrodes and negative electrodes are overlapped alternately interposing a similar separator therebetween, a prismatic nickel/hydride battery can be obtained by inserting the electrodes group in a suitable prismatic battery case followed by filling electrolyte thereafter sealing as in said sealed cylindrical nickel/hydride battery.

Here, for a positive electrode, as shown in Fig.5(a) as an electrode obtained by the following method is employed. An aqueous paste mainly composed of Ni(OH) ₂ powder is filled into or coated on a conductive electrode substrate with an apparent thickness of 200 to 500 µm by the process a nickel foil with a thickness of 10 to 40µm is made three dimensional by forming a bridge structural portions . Then, said electrode is dried, followed by applying a press work, thereby obtaining an electrode for a positive electrode. In this conductive electrode substrate provided with numerous bridge structural portions, when applied for a nickel positive electrode, it is preferable that the size of a height of a bridge, the size of a width of a bridge, the size of a length of a bridge and the pitch between bridges are decided so that the distance between most active material powders and the substrate most adjacent to said powders is within 150µm. The reason is due to the abrupt difficulty of high rate discharge when the distance between most of the widely used active material powders and said conductive electrode substrate for current collection exceeds 150µm. In other words, it is desirable that the height of above bridge is made as high as possible and the pitch thereof are made as small as possible when mass production is taken into account.

As shown in Fig. 5 (b), which is a sectional view taken along a line A-A of Fig. (a), a surface bridge structural portion has a bridge structural portion formed by an inclined part 12 and an upper side part 11. In addition, as shown in Fig. 5 (a), in a surface bridge structural portion, a side aperture 15 penetrates in a longitudinal direction of a drawing under an upper side part 11.

When applied for a nickel positive electrode, it is preferable that a conductive electrode substrate provided with innumerable bridges formed both sides of nickel foil retains active material powders in a high loading level , bringing the thickness of a conductive electrode substrate close to the thickness of an electrode as much as possible. Therefore, a thickness of the substrate which was made three-dimensional by innumerable bridges is not less than 50 % of a thickness of an electrode. Thus, a surface bridge structural portion and a back bridge structural portion, x and y, P1 and P2 in Fig. 5 preferably have the thickness of within the range of 100 to 200 µm, 150 to 300µm, 50 to 100µm, and 50 to 100µm, respectively. Since a height of a surface bridge structural portion and / or a back bridge structural portion can be easily prepared using rollers and the like, it is preferable that each of surface bridge structural portion and / or a back bridge structural portion has substantially the same height and thickness of a substrate as a result is 250 to 600µm. Regarding a shape of a surface bridge (face bridge) and a back bridge, as shown in Fig. 5 (b) and (c), although a substantially trapezoidal shape and/or a substantially semi-spherical shape with a linear portion of a lower hem removed can be used as a shape viewed from a lateral direction, it is preferable to employ a shape with a linear portion of a lower hem removed from the viewpoint of easy production.

Also, as shown in Fig.5, it is preferable that in a surface bridge structural portion which is a convex bridge and a back bridge structural portion which is a concave bridge, not less than half the number of bridge adjacent to said one convex bridge structural portion or one convex bridge structural portion group are concave bridges or concave bridge groups to keep the most of active materials within 150µm distance from the substrate. For the same purpose, an incline in one direction of both sides bridges, which is, for example, formed by rolling presswork, promote the active materials within 150µm distance.

It is preferable that the surface bridge line and the back bridge line are alternate and shifting the pattern of the surface bridge from the pattern of the back bridge along the line as shown in Fig 5(a) is effective for preventing the substrate from a extension during the electrode press work.

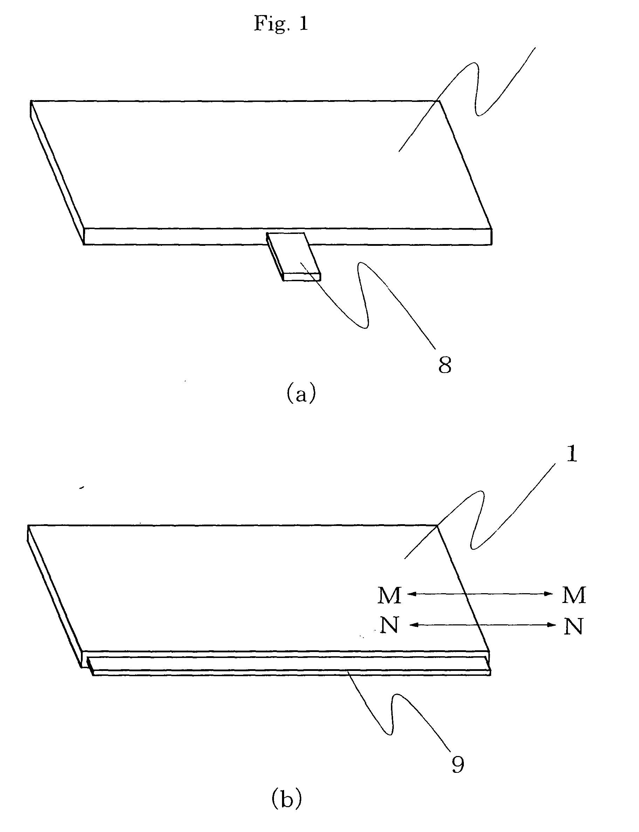

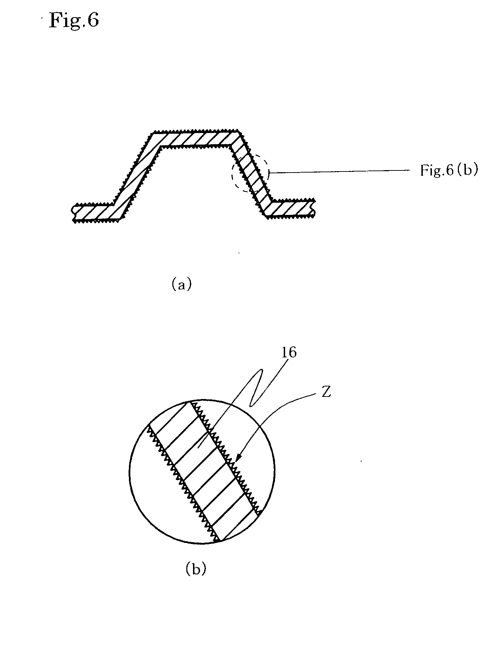

A type of an electrode may either a nickel positive electrode 1 with a table as shown in Fig. 1 (a) or a nickel positive electrode with a part of a conductive electrode substrate exposed in one long side as shown in Fig. 1 (b). In addition, it is preferable that extremely microscopic concavities and convexities are provided on a surface of a nickel foil as shown in Fig. 6 before conducting three dimensional process on a nickel foil, since contacts points with active material powders increase and effective discharge characteristics is further improved.

Although the size of extremely microscopic concavities and convexities is not specially limited, the average height is preferably not greater than 10µm. As a shape of said extremely microscopic concavities and convexities, prismatic shape, pyramidal shape, column shape, conical shape, or combinations thereof can be used. Said extremely microscopic concavities and convexities may be obtained by a roll-press process as shown in Fig. 6 or by blasting process, plating process, and the like.

In addition, it is preferable for preventing oxygen gas generation from a surface of conductive electrode substrate that at least one selected from a group consisting of cobalt, calcium, titanium, silver, yttrium, lanthanide, carbon, silicon and/or their oxides is arranged on a substrate surface or in the vicinity of a surface layer. The reason is that oxygen gas generation caused by overcharge, causes the deterioration of the charge efficiency of an electrode particularly under high temperature.

These metals or metal oxides may be arranged during a preparing process of a nickel foil or also may be arranged during a plating process or a blasting process. These metals or metal oxides can be arranged in the vicinity of a surface layer by known methods, for example, forming in a state of solid solution.

Here, since a hydrogen absorbing alloy powder based negative electrode is half as thick as a positive electrode, the negative electrode can resist relatively high rate discharge. Therefore, a negative electrode for general purposes can be used. However, when high rate discharge equivalent to not less than 5C rate is required, it is preferable to also apply a conductive electrode substrate of the present application for these alloy based negative electrodes.

Here, for a separator, a thin non-woven clothe which is much thinner than conventional non-woven cloths (120-170µm) and which comprises polyolefin synthetic resin fiber with hydrophilic property provided by sulfonation treatment is used. The separator has thickness of 100 µm or less, preferably has thickness of 30-80µm. By this, deterioration of battery energy density caused by elongating a separator (that is, by increasing the volume of a separator) for the use of a thin electrode (which needs a long separator) can be prevented. This thin non-woven separator can be applied without any problem in using flexible thin positive and negative electrodes other than the above mentioned electrodes which is hard to generate cracking even when processed to be spirally rolled.

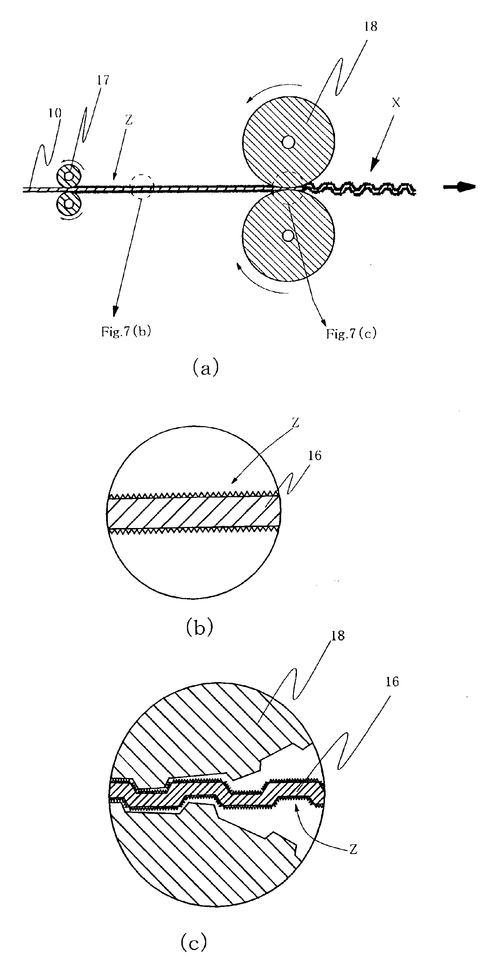

Next, explanation goes concerning the production method of a conductive electrode substrate and a filling of paste active material powders into the substrate. Fig. 7 shows an example of a production method of a conductive electrode substrate. Beforehand, by a roller 17 with extremely microscopic concavities, innumerable extremely microscopic concavities and convexities (average height: not more than 10µm) corresponding to a nickel foil surface is provided by a roller 17 with extremely microscopic concavities and convexities provided on its surface are provided on a nickel foil surface. Next, this nickel foil is processed to be three dimensional process by forming innumerable bridge structural portions, with a roller 18, thereby obtaining a substrate for an electrode.

Here, as methods of providing innumerable microscopic concavities and convexities on a surface, blast treatment process making fine particles collide as mentioned earlier, plating process for forming concavities and convexities, and the like can be employed and any can be used since they have similar effects. Further, as one of the methods of processing into three dimensional with innumerable bridge structural portions, there is a method of alternately providing innumerable microscopic concavities and convexities both in upper and lower plate dies and applying a press work between plate dies that can be engaged, the same effect is obtained. However, a method of using a roller with innumerable microscopic concavities and convexities provided on a surface is more suitable for productivity.

A substrate for electrode with three dimensional process conducted by using a bridge forming innumerable microscopic concavities and convexities alone can realize an electrode with low cost, high power, and high reliability. High power characteristics are further improved by providing extremely microscopic concavities and convexities on a whole surface of a substrate for an electrode.

Further, separation of active materials from a substrate can be prevented by the following method since the substrate can follow the elongated electrode at the time of process

First, said conductive electrode in a wide belt like form is made three dimensional by applying innumerable three dimensional microscopic concavities and convexities. This three dimensional process is conducted by making said conductive electrode pass though dies which can be engaged in both upper and lower parts provided with microscopic concavities and convexities process. Or this three dimensional process is conducted by making said conductive electrode pass though rollers provided with the similar process as above dies. Next, by annealing, proper hardness for the electrode substrate is obtained. It is difficult to specify the appropriate hardness of an electrode since requirement varies depending on types of active material powders, but the appropriate hardness is hardness within the range in which an electrode can resist the external force on an electrode substrate.

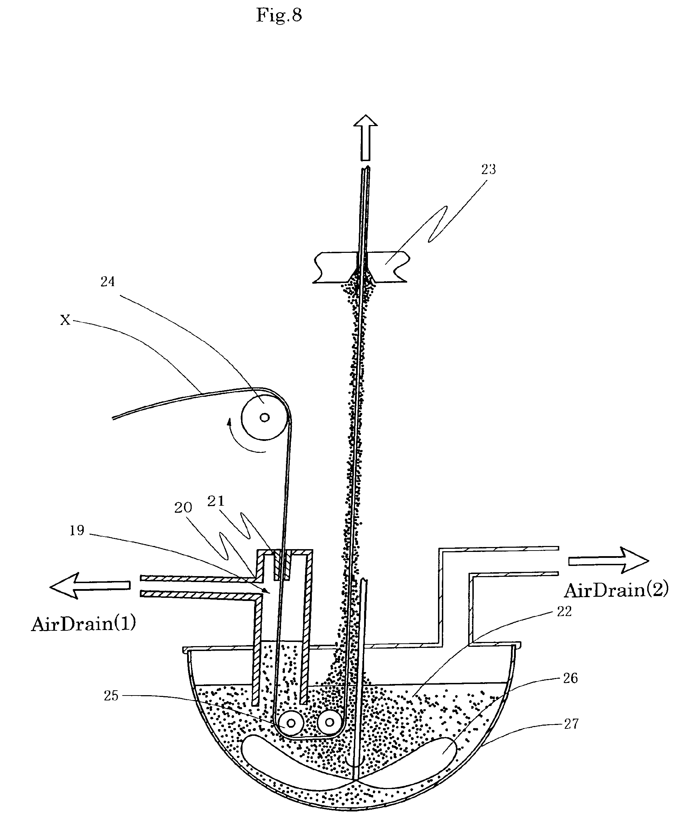

Fig.8 shows an example of filling into and coating on a substrate X for an electrode of the present invention with a paste mainly composed of Ni(OH)₂. In the present invention, loading level is improved by degassing through Air Drain(1),beforehand in vacuum or substantially vacuum state 19 right before a substrate X for an electrode paste is immersed in a paste. The reason is that it is important for high density filling to remove air included in a bridge structural portion. As shown in Fig. 8, preferably, an inner pressure in the container 27, especially the pressure on the upper part of the paste can be lowered by Air Drain (2) to prevent elevation of a fluid level of said paste caused by Air Drain (1) in the decompression chamber 19.

One example of vacuum degassing was hereby shown. However, for similar purposes, filling may also be conducted by alternately degassing in such a way as to push through a paste from one side of a substrate to the opposing side of a substrate. This filling process is conducted in both surface (face side) and back surface (back side) of a substrate X for an electrode by one side at a time.

Further, after drying said paste followed by filling or coating, by conducting a roll- press work several times from the same direction and by making an innumerable bridges provided on a substrate for an electrode incline in one direction parallel to an electrode surface, retention property including active material powders can further be improved, and also, further high discharge characteristics can be obtained. Instead of using a paste including active material powders, a paste including pseudo-active material powders may be used.

It is preferable that a conductive electrode substrate of the present invention is processed to have innumerable bridges so that a substrate is as 0.5 to 1.5 times as thick as a final electrode. Processes for obtaining an electrode include materials which affect a thickness of an electrode and processes which affect a thickness of an electrode. Said materials are represented by active material powders and pseudo-active material powders, and said processes are represented by processes of filling or coating said materials and roll-press process. Therefore, when said conductive electrode substrate is 0.5 to 1.5 times as thick as the final electrode, it is easy to adjust the types of materials and process conditions so that the thickness of the substrate might not be larger than the final thickness of an electrode used for batteries.

In addition, a battery of the present invention is a battery using a non-sintered thin electrode for positive electrodes or negative electrodes. Said non-sintered thin electrodes are obtained by filling or coating mainly active material powders or pseudo-active material powders in a conductive electrode substrate having a three dimensional structure. The battery of the present invention is also the battery using non-sintered thin electrodes having the following characteristics:
(e) materials of a positive electrode is mainly composed of nickel oxide and/or oxide of manganese, and materials of a negative electrode is mainly composed of a species selected from hydrogen absorbing alloy, cadmium, or zinc,
(f) a thickness of a positive electrode is within the range of 200 to 500µm on average,
(g) a thickness of a negative electrode is within the range of 100 to 300µm on average, and
(h) a thickness of a separator is within the range of 30 to 80µm on average.

For information, said electrode group means a formation in which a single or plural of positive and negative electrodes are integrated interposing a separator therebetween. It is preferable to make thickness of a positive electrode, a negative electrode, and of a separator within said range since high power characteristics can be improved without deteriorating energy density as a battery. Here, although it is preferable that the above separator is conducted with a hydrophilic treatment by chemically introducing a sulfonic group or a group mainly composed of sulfur element and/or oxygen element into a polyolefin resin from a view point of long lasting reliability. However, improved types of conventionally used nylon resins can be used, which further shows more good characteristic by including sulfonated fine powders on and/or internal of the nylon fibers.

In addition, it is preferable that the most of the electrode surface is coated with a fine powder of an electrolyte proof synthetic resin. And/or it is preferable that an electrolyte proof synthetic resin is arranged on a surface of, or in the vicinity of a surface of one side face of an electrode (a face in a thickness direction). The reason is that the shedding of active material powders is prevented, thereby obtaining a battery with even higher reliability. For information, in order not to prevent reaction of active materials and the like, it is preferable that said synthetic resin of the latter case is arranged as a layer of fine powders of an electrolyte proof synthetic resin or as a highly porous film and that said synthetic resin of the latter case permeates reacting ions. The significance of coating a disconnected part with electrode process with porous or film-like resin foils is that by coating electrode surface in which shedding of active material powders and the like easily occurs, a battery with higher reliability can be obtained.

Here, as above mentioned, explanation was made on Ni/MH batteries for convenience. However, the above conductive electrode substrate is not limited to an electrode substrate for Ni/MH batteries. The idea of the present invention on Ni/MH batteries can be applied to electrodes for Ni/Cd batteries and Li secondary batteries as well which require high rate discharge.

Next, a concrete embodiment of the present invention is described. (Embodiment 1)

By passing Nickel foil in a wide belt-like form having a thickness of 25µm through between two pairs of rollers with a diameter of 30 cm on which microscopic concavities and convexities are formed, innumerable microscopic concavities and convexities as shown in Fig.5 are formed on the substantially whole surface of a nickel foil in a wide belt-like form, thereby obtaining a three dimensional conductive electrode substrate in a wide belt-like form. Here, the inclined angle of a surface bridge structural portion inclined part 12 and a back bridge structural portion inclined part 12' is 50° with x: 100µm, y: 150µm, P1: 80µm, and p2: 80µm in Fig.5. A thickness of a nickel foil in a wide belt-like form, that is, a thickness of a three dimensional conductive electrode substrate is 500µm, which is substantially close to a thickness of a final electrode which is 400µm. Next, as shown in Y part, a press work operation is conducted for a part cut off in the process of preparing electrodes or a part used for an electrode lead between a roll press or between a flat plane press having a space gap about 50µm. By conducting said press work, said part is made thinner than a substrate present inside of the electrode, and restoring said part to the original two dimensional state. Regarding the process of a substrate, said three dimensional process can be applied only for X part and not for Y part, or only a process of forming a wave form can be employed. However, in order to prevent breakage of a part of a conductive electrode substrate due to the extensity difference of X part and Y part, it is preferable to apply said process to Y part since said breakage can easily be prevented.

Aqueous paste was prepared by adding about 2 wt % of a polyolefin and / or fluororesin binder, or a thickening agent to a mixed powder of 100 parts by weight of Ni(OH)₂ spherical powder with a diameter of about 10 µm in which about 1 wt % of cobalt, about 3 wt % of zinc are dissolved into nickel hydroxide so as to form a solid solution, 5 parts by weight of CoO powder, and 4 parts by weight of ZnO powder. A whole conductive electrode substrate with a wide belt-like form was passed through said aqueous paste, thereafter preparing a desirable thickness by removing extra paste by making said paste pass through between doctor blades.

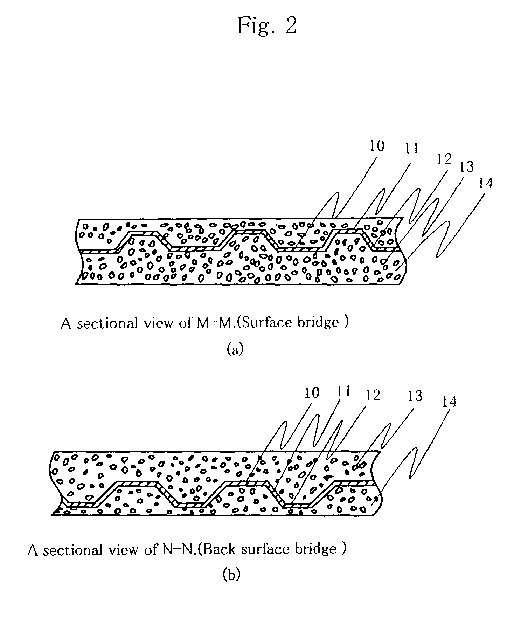

Next, after drying the electrode with coating and/or filling of said paste at a temperature of 80 °C, a press work was applied to make a thickness of the electrode 400µm by making the electrode pass between flat rollers, followed by cutting the electrode so that the electrode reaction part may have a width of 41 mm and a length of 145 mm. The remained part as a lead in a process of cutting (9 or 9' in Fig.1) is an electrode which was made two dimensional with the said thickness of about 40µm, and an active material powder on a surface was removed, and with a lead plate further added as required by welding. Thus, a nickel positive electrode for AA size with a theoretical volume of 1600 mAh provided with an electrode lead as shown in Fig. 1 (a) or (b) and having a disconnected surface of said electrode as shown in Fig.2. Further, this electrode was impregnated into suspension liquid with a fluororesin fine powder with concentration of about 3 wt %, followed by drying. For information, although spherical Ni(OH)₂ powders with the above solid solution were used in the present embodiment, there is no significant problem when spherical Ni(OH)₂ powders whose surface is coated with cobalt oxide is used.

A spirally rolled electrode group was prepared of this nickel positive electrode, a negative electrode having MmNi₅ hydrogen absorbing alloy with a thickness of 220µm, a width of 41mm, and the length of 185 mm which was produced by a conventional method, and a separator composed of a non-woven cloth made of an available sulfonic polyolefin resin fiber with a thickness of 130µm and a porosity of about 60%. Then, by filling about 3 cc of KOH aqueous solution with concentration of about 30 wt % into said spirally electrode group followed by sealing, thereby obtaining an AA sized Ni/MH battery of Example 1 as shown in Fig.3.

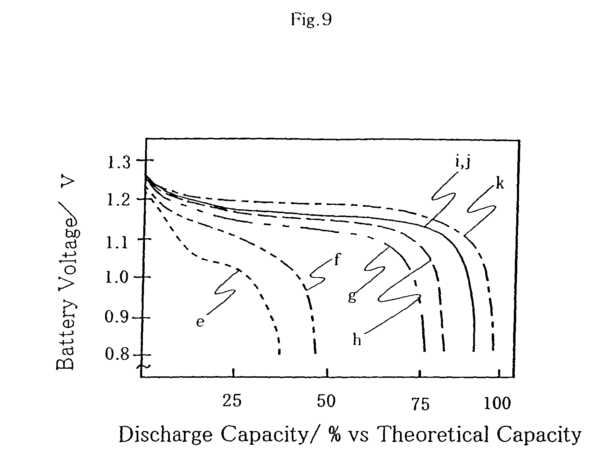

10 cells of an AA size battery in Example 1 were chemically converted 3 cycles under conventional standard charge and discharge condition followed by discharging at a current value equivalent to 10 C. The result was shown in g of Fig 9. For g, average value of 8 cells was adopted excluding 2 cells in total which are maximum value and minimum value of the characteristics.

In Fig 9, as a comparative example with a conventional electrode, characteristics of a battery using a nickel positive electrode (foam type) with a thickness of 700 µm instead of using a positive electrode of said Embodiment 1 and characteristics of a battery using a nickel positive electrode processed to be thin with a thickness of 400 µm instead of using a positive electrode of said Embodiment 1 were shown in e and f of Fig 9, respectively.

The result shows that a battery using a nickel positive electrode of the present Embodiment was excellent in evenness of a discharge curve and about 75 % of a theoretical capacity was available for discharge and this battery was much more excellent than a foam electrode which represents 3 DM type which is the most excellent non-sintered electrode of the conventional electrodes. In other words, a battery in the Embodiment 1 is more excellent in high power characteristics (high rate charge and discharge characteristics) compared with conventional batteries. It is assumed that electronic conductivity of an electrode as a whole was improved due to the application of a conductive electrode substrate which was made three dimensional by providing innumerable microscopic concavities and convexities.

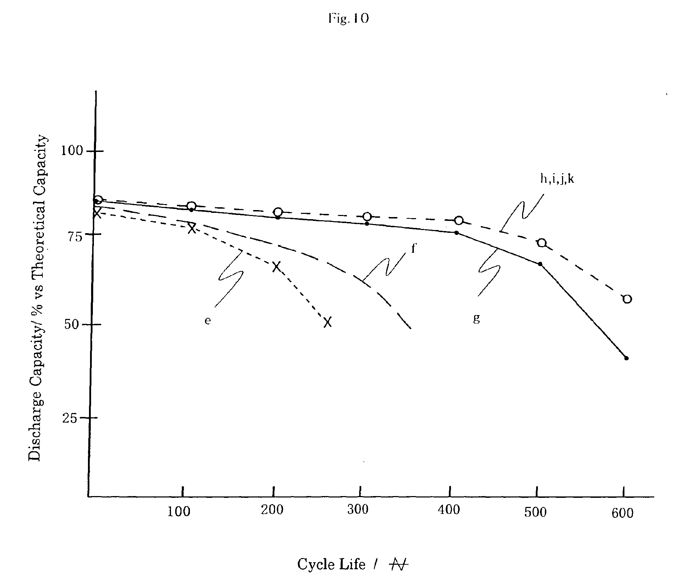

Further, the result of a life cycle of charge and discharge conducted subsequently was shown in g of Fig 10. The test was conducted under the following condition. Charge: 1C, 105 % of the previous discharge amount, Discharge: 1 C, up to 0.8 V and all were conducted under the atmosphere of 40 °C.

In this process, discharge amount was confirmed by each 100 cycle under standard charge and discharge condition and the data were plotted in the figure. For information, the standard charge and discharge was under the condition where the charge is 0.1C, 120 % of the previous discharge amount, the discharge is 0.2 C, up to 1.0 V and all were conducted under the atmosphere of 20 °C. As a result, Ni/MH battery of the present Embodiment was much more excellent in a cycle life as well than a foam electrode which represents 3 DM type for general purposes as seen from the comparison with conventional battery cycle characteristics shown in e and f in the figure. It is assumed that a conductive electrode substrate which was made three dimensional by providing a bridge structural portion with innumerable microscopic concavities and convexities is excellent in retention property of active material powders and the like. Further, it is assumed that with improved reaction property due to the improvement in electronic conductivity of an electrode as a whole, that is, with progress in uniform reaction as a whole, a loading to some parts of active materials was alleviated.

### (Embodiment 2)

Conventional aqueous paste using MmNi₅ hydrogen absorption alloy powders for general purposes was coated and/or filled in a conductive electrode substrate obtained in Embodiment 1 as in the preparation of a positive electrode described in Embodiment 1, followed by removing the extra paste by making the paste pass between doctor blades, thereby obtaining desirable thickness. Next, after drying for 30 minutes at a temperature of 80 °C, press work was applied between flat rollers, thereafter processing and cutting the reaction part of the electrode to form the dimension with a thickness of 220µm, with a width of 41 mm, and with a length of 185mm, thereby producing a negative electrode. By using this negative electrode, a Ni/MH battery with AA size was produced by the same method of Example 2.

10 cells of an AA size battery were chemically converted 3 cycles under conventional standard charge and discharge condition as in the Embodiment 1 followed by discharging at a current value equivalent to 10 C. The result was shown in h of Fig 9. For h, average value of 8 cells was adopted excluding 2 cells of maximum value and minimum value of the characteristics. The result shows further improvement in high rate discharge characteristics than the battery shown in the Embodiment 1. In addition, as shown in h of Fig. 10, cycle life was further improved as well.

From these results, it is assumed that high rate discharge characteristics are improved since reaction of hydrogen absorbing alloy powders as a whole generates evenly due to the improvement of a negative electrode as a whole.

It is also assumed that as a result of the improvement in absorption reaction of oxygen gas generated when overcharged, deterioration of a negative electrode was also prevented.

### (Embodiment 3)

Z with extremely microscopic concavities and convexities provided innumerably on a surface is obtained by making a nickel foil with a wide belt-like form with a thickness of 25µm in Embodiment 1 pass through a roller 17. The roller 17 is provided with innumerable extremely fine concavities and convexities (cone shaped with an average height of a convex part of 3µm and an average inclination of 50°). Hereinafter, a Ni/MH battery with AA size was produced as described in Embodiment 1.

10 cells of an AA size battery were chemically converted 3 cycles under conventional standard charge and discharge condition as in the Embodiment 1 followed by discharging at a current value equivalent to 10 C. The result was shown in i of Fig 9. For i, average value of 8 cells was adopted excluding 2 cells of maximum value and minimum value of the characteristics. The result shows further improvement in high rate discharge characteristics than the battery shown in the Embodiment 1. The result shows even without using a conductive electrode substrate of the present invention for a negative electrode, the high rate discharge characteristics are equivalent to those of a battery in Embodiment 2. In addition, as shown in i of Fig. 10, cycle life was further improved as well and the same result was obtained as in Embodiment 2.

This result shows that a contact point increased between a conductive electrode substrate having innumerable extremely fine concavities and convexities on a nickel surface as a whole and a filling or coating powder. Here, a nickel composes said conductive electrode substrate. Consequently, it is assumed that with the improvement in conductivity of an electrode as a whole, an even reaction of Ni(OH)₂ spherical powders as a whole is promoted, thereby improving cycle life characteristics as well.

### (Embodiment 4)

An AA size battery whose theoretical capacity of 1700mAh was prepared by the same method as in Embodiment 2 except the following. That is, concerning the separator in Embodiment 2, a thin separator made of a non-woven cloth of sulfonic polyolefin resin fiber with a thickness of 90µm and a porosity of about 55 % was employed. And accordingly, a length of a nickel positive electrode in Embodiment 2 was changed to 160mm long and a length of a hydrogen absorbing alloy negative electrode was changed to 200 mm long.

10 cells of this battery were chemically converted 3 cycles under conventional standard charge and discharge condition as in the Embodiment 1 followed by discharging at a current value equivalent to 10 C. The result was shown in j of Fig 9. For j, average value of 8 cells was adopted excluding 2 cells of maximum value and minimum value of the characteristics as in Embodiment 2. The result shows further improvement in high rate discharge characteristics than the battery shown in the Embodiment 2. In addition, as shown in j of Fig. 10, the same result of cycle life was obtained as in Embodiment 2.

This result shows that in order to improve high rate discharge characteristics, it is greatly effective to lessen the distance between a positive electrode and a negative electrode by using a thin separator.

### (Embodiment 5)

A spirally rolled electrode group was prepared by changing a nickel positive electrode from the electrode in Fig.1(a) to the electrode in Fig.1(b).

Next, a nickel plate was attached to the whole lead of said electrode and was integrated by welding at several points, thereby composing a conventional multi-connector. The remaining conditions follow the method of Embodiment 4, thereby preparing an AA size battery with a theoretical capacity of 1800mAh.

10 cells of an AA size battery were chemically converted 3 cycles under conventional standard charge and discharge condition as in the Embodiment 1 followed by discharging at a current value equivalent to 10 C. The result was shown in k of Fig 9. For k, average value of 8 cells was adopted excluding 2 cells of maximum value and minimum value of the characteristics as in Embodiment 4. The result shows further improvement in high rate discharge characteristics than the battery shown in the Embodiment 4. It is assumed that the result was due to the reason that impedance decreased further (about 3mΩdecrease) by improving a lead part of an electrode to have many contact points.

### (Embodiment 6)

As above, as a process of filling the active material powders of the nickel positive electrode in Embodiment 1, before immersing in the aqueous paste 22 as shown in Fig. 8, active material powders were made to pass through the decompression chamber shown in 19 (about 10¹ torr) and the air was degassed in the conductive electrode substrate, thereby filling and /or coating aqueous paste by the same method as in Embodiment 1. Hereinafter, by the same method as in Embodiment 1, an AA size nickel positive electrode with theoretical capacity of 1700mAh was obtained and an AA size Ni/MH battery using this electrode was prepared.

For information, this method can also be applied when active materials fill in or coat on highly porous substrates other than the conductive electrode substrate of the present embodiments. Further, in addition to filling by a decomposition method, effective methods also include a method of filling active materials in both surface (face side) and back surface (back side) of a conductive electrode substrate beforehand by one side at a time alternately in a displacing manner so as to make a paste pass through the opposite side. However, from the view point of easy operation, decompression method is more preferable.

Active material powders could evenly fill in the electrode used in this battery and the filling density of active material powders improved by 6 to 7 %. High rate discharge characteristics and life cycle characteristics showed tendency to relate to high rate discharge characteristics and life cycle characteristics of Embodiments 1 to 4 as above. For information, this decompression method is not limited to an electrode using a substrate of the present invention.

As mentioned, Embodiments have been explained using drawings. In particular, it is remarkable that when pitches P1 and P2 of a bridge structural portion having concavities and convexities were expanded in a pattern of a bridge structural portion forming microscopic concavities and convexities in Fig.5, high rate discharge characteristics were drastically deteriorated.

From the test result examining the relation of the thickness of active material layers and high rate discharge characteristics, it is known that high rate discharge characteristics tend to be drastically deteriorated when thickness of many active material layers exceeds 150µm. In the present case, it is assumed that many active materials have a distance not less than 150µm. Therefore, it is important for a high rate discharge reaction to keep the distance between active material powders and the conductive electrode substrate part which is most adjacent to active material powders 150µm.

It is further preferable for high rate discharge and a cycle life when a roll press is employed as in the present embodiments to deform a bridge structural portion forming microscopic concavities and convexities in Fig. 5 in one direction during a press work process and to improve the retention property of active materials together with supplementary method of keeping the distance between active material powders and the conductive electrode substrate part which is most adjacent to active material powders 150µm.

As above mentioned, when a non-sintered nickel positive electrode of the present invention using conductive electrode substrate is used, batteries with low cost and excellent in high rate discharge characteristics, a cycle life, and reliability, in particular, Ni/MH batteries can be obtained. Further, by applying a conductive electrode substrate for a hydrogen absorbing alloy negative electrode and by applying a non-sintered separator likewise, the application No.2003-139433, the disclosures of which are incorporated herein by reference. While a detailed description of the invention has been provided above, the present invention is not limited thereto and various modifications will be apparent to those of skill in the art. A particular embodiment of the invention includes a battery using non-sintered thin electrodes and a separator, wherein there is used for a positive electrode and/or a negative electrode a non-sintered thin electrode in which active material powders or pseudo-active materials are filled into and/or coated on a conductive electrode substrate having a three dimensional structure; the separator has thickness of 100µm or less; and the conductive electrode substrate used for said non-sintered thin electrode is formed by making a thin film-like metal plate three dimensional;
(a) said conductive electrode substrate is obtained by making the thin film-like metal plate three dimensional by providing said metal plate with a multiplicity of hollow microscopic concave-convex bridge structural portions, wherein said thin film-like plate has electrolyte proof property; and preferably
(b) a majority, preferably almost all of, most preferably all of, said concave-convex bridges are inclined in one direction which is parallel to an electrode surface.

A further particular embodiment of the invention provides a method for producing a battery using a non-sintered thin electrode comprising:
filling or coating a paste of a mixed powder mainly composed of active materials or pseudo-active materials in a long conductive electrode substrate in a wide belt-like form;
conducting a press work molding between metal rollers after drying; and
disconnecting the substrate into a desired size, thereby obtaining a non-sintered thin electrode: the following step of disconnecting comprises
   immersing a whole electrode in a liquid in which electrolyte proof synthetic resin fine powders are dispersed,
      or
   dissolved or spraying said liquid over an electrode surface,
      and/or
   coating an electrode disconnected part with a fine powdery or highly porous film-like resin foil.

A further particular embodiment of the invention provides a battery using non-sintered thin electrodes for positive electrodes and/or negative electrodes, wherein said non-sintered thin electrodes are obtained by mainly filling or coating active materials or pseudo-active materials in a conductive electrode substrate in which alkaline- proof metal foil is formed three dimensional, and an electrode group is a state in which single or plural of positive electrode and negative electrode are formed integrally interposing a separator therebetween in said battery ; the electrode group has
(e) materials of a positive electrode is mainly composed of nickel oxide and/or manganese oxide, and materials of a negative electrode is mainly composed of a species selected from hydrogen absorbing alloy, cadmium, or zinc,
(f) a thickness of a positive electrode is within the range of 200 to 500µm on average,
(g) a thickness of a negative electrode is within the range of 100 to 300µm on average, and
(h) a thickness of a separator is within the range of 40 to 100µm on average.

A further particular embodiment of the invention provides a method of producing a battery using a non-sintered thin electrode, wherein said non-sintered thin electrode is obtained by the steps comprising,
filling or coating a paste of a mixed powder mainly composed of active materials or pseudo-active materials in a long conductive electrode substrate in a wide belt-like form,
conducting a press work molding between metal rollers after drying,
   and
disconnecting the electrodes into a desired size: an electrode group is a state in which single or plural of positive electrode and negative electrode are formed integrally interposing a separator therebetween in said battery; the electrode group has
   (e) materials of a positive electrode is mainly composed of nickel oxide and/or manganese oxide, and materials of a negative electrode is mainly composed of a species selected from hydrogen absorbing alloy, cadmium, or zinc,
   (f) a thickness of a positive electrode is within the range of 200 to 500µm on average,
   (g) a thickness of a negative electrode is within the range of 100 to 300µm on average, and
   (h) a thickness of a separator is within the range of 40 to 100µm on average
The invention is defined by the claims that follow.

## Claims

1. A battery using non-sintered thin electrodes and a separator, wherein there is used for a positive electrode and/or a negative electrode a non-sintered thin electrode in which active material powders or pseudo-active materials are filled into and/or coated on a conductive electrode substrate having a three dimensional structure; the separator has thickness of 100µm or less; and the conductive electrode substrate used for said non-sintered thin electrode is formed by making a thin film-like metal plate three dimensional;
(a) said conductive electrode substrate is obtained by making the thin film-like metal plate three dimensional by providing said metal plate with a multiplicity of hollow microscopic concave-convex bridge structural portions, wherein said thin film-like plate has electrolyte proof property; and
(b) a majority of said concave-convex bridges are inclined in one direction which is parallel to an electrode surface.

2. A battery as claimed in Claim 1, in which said substrate has a rough surface in almost all of the surface area representing fine concave-convex part and/or corrugated part.

3. A battery as claimed in either Claim 1 or Claim 2, wherein a thickness of said metal film-like metal plate is 10 to 40 µm; a thickness of a substrate which is made three dimensional by a concave-convex bridge structural portion is not less than 50 % of a thickness of an electrode ; and the most adjacent distance between most of active materials or pseudo-active materials which are filled and/or coated and said conductive electrode substrate is kept not greater than 150 µm.

4. A battery as claimed in any one of Claims 1 to 3, wherein said conductive electrode substrate is mainly composed of nickel, iron, copper, aluminum, zinc or alloy thereof.

5. A battery as claimed in any one of Claims 1 to 4, wherein at least one species selected from cobalt, calcium, titanium, silver, yttrium, lanthanide, carbon, silicon and/or oxides thereof is arranged on a surface of, or in the vicinity of the surface of said conductive electrode substrate.

6. A battery as claimed in any one of Claims 1 to 5, wherein a whole or a part of an electrode lead of said non-sintered thin electrode is the extended conductive electrode substrate having said three dimensional structure.

7. A battery as claimed in Claim 6, wherein a thickness of a substrate composing a whole or a part of said electrode lead is thinner than the substrate present in the electrode and close to two dimensional.

8. A battery as claimed in any one of Claims 1 to 7, wherein most surface of the electrode is treated by coating with an electrolyte proof fine powder made of a synthetic resin, and/or arranging an electrolyte proof fine powdery or a highly porous film-like synthetic resin on the surface of, or in the vicinity of the surface of at least one disconnected electrode surface.

9. A method for producing a battery using a non-sintered thin electrode comprising:
filling and/or coating a long conductive electrode substrate in a wide belt-like form, with a paste of a mixed powder mainly composed of active materials or pseudo-active materials;
drying the conductive electrode substrate filled and/or coated with the paste;
conducting a press work molding between metal rollers; and
cutting the electrode into a desired size, thereby obtaining a non-sintered thin electrode;
the conductive electrode substrate in a wide belt-like form being obtained by the method comprising:
(1)making the substrate three dimensional by forming a metal foil with a multiplicity of three dimensional concavities and convexities between dies in which both upper and lower parts can be engaged by conducting microscopic three dimensional process or through a similarly processed roller, and
(2)annealing the substrate to achieve appropriate hardness.

10. A method as claimed in Claim 9, in which the conductive electrode substrate is processed to have a rough surface by a blast process, electrolytic deposition method, or etching process after making the substrate three dimensional.

11. A method as claimed in either Claim 9 or claim 10, in which the substrate is annealed after the three dimensional processing step has been carried out.

12. A method for producing a battery using a non-sintered thin electrode comprising:
processing to make a part of a long conductive electrode substrate almost two dimensional by a press work operation, wherein a part of the electrode in a wide belt-like form conducted by microscopic concave-convex process as a whole is used for an electrode lead in the final stage beforehand ;
filling and/or coating a long conductive electrode substrate in a wide belt-like form with a paste of a mixed powder mainly composed of active materials or pseudo-active materials;
drying the conductive electrode substrate filled and/or coated with the paste;
conducting a press work molding between metal rollers; and
cutting the electrode into a desired width, thereafter cutting the electrode into a desired length.

13. A method as claimed in any one of Claims 9 to 12, wherein after removal of most filling or coating powders on a related part, a part of or a whole conductive electrode substrate one part of which is processed to be almost two dimensional by a press work operation beforehand is used as an electrode lead or is cut off and removed, followed by drying.

14. A method for producing a battery using a non-sintered thin electrode comprising:
filling and/or coating a long conductive electrode substrate in a wide belt-like form with a paste of a mixed powder mainly composed of active materials or pseudo-active materials;
conducting a press work molding between metal rollers after drying;
and
cutting the substrate into a desired size, thereby obtaining a non-sintered thin electrode: in which a step following the cutting comprises
immersing a whole electrode in a liquid in which electrolyte proof synthetic resin fine powders are dispersed,
or
dissolved or spraying said liquid over an electrode surface,
and/or
coating a part cut off from the electrode with a fine powdery or highly porous film-like resin foil.

15. A battery using non-sintered thin electrodes, wherein there is used for a positive electrode and/or a negative electrode a non-sintered thin electrode in which active material powders or pseudo-active materials are mainly filled into and/or coated on a conductive electrode substrate having a three dimensional structure:
the separator has thickness of 100 µm or less :and
the conductive electrode substrate used for said non-sintered thin electrode is formed by making a thin film-like metal plate three dimensional;
(c) said conductive electrode substrate is obtained by making the thin film-like metal plate three dimensional with a multiplicity of hollow microscopic concavo-convex parts provided, wherein said thin film-like metal plate has a multiplicity of extremely microscopic concavities and convexities formed on a face side and a back side and has electrolyte proof property; and
(d) said conductive electrode substrate is made three dimensional so that a distance between most active material powder or pseudo-active material powder which is filled thereinto or coated thereon and the most adjacent part of said conductive electrode substrate is kept not greater than 150µm.

16. A battery as claimed in Claim 15, wherein most surface of an electrode is coated with electrolyte proof fine powder made of a synthetic resin and/or that an electrolyte proof fine powdery or a highly porous film-like resin foil is arranged on the surface of, or in the vicinity of the surface of at least one disconnected electrode surface.

17. A method for producing a battery using a non-sintered thin electrode comprising a step(s) of obtaining a thin film-like metal plate having a multiplicity of extremely microscopic concavities and convexities formed on a face side and a back side ; the step(s) is at least one selected from the group consisting of
(e) step of transcribing said extremely microscopic concavities and convexities on said thin film-like metal plate surface by making said metal plate pass between rollers provided with extremely microscopic concavities and convexities process after made into a film-like state by repeated metal rolling,
(f) step of blast process with hard fine powders,
(g) step of etching a surface layer,
(h) step of plating so that a surface has concavities and convexities by electroforming, and/or combination thereof.;
wherein said conductive electrode substrate for the electrode is obtained by making the thin film-like metal plate three dimensional with a multiplicity of hollow microscopic concavo-convex parts provided.

18. A battery containing an electrode group containing one or more positive electrodes and one or more negative electrodes together with a separator interposed therebetween, which battery uses a non-sintered thin electrode for a positive electrode and/or a negative electrode, wherein said non-sintered thin electrode is obtained by filling and/or coating a conductive electrode substrate in which alkaline-proof metal foil has been made three dimensional, with active materials or pseudo-active materials; in which
(e) the positive electrode is mainly composed of nickel oxide and/or manganese oxide, and the negative electrode is mainly composed of a species selected from hydrogen absorbing alloy, cadmium, or zinc,
(f) the thickness of the positive electrode is within the range of 200 to 500µm on average,
(g) the thickness of the negative electrode is within the range of 100 to 300µm on average, and
(h) the thickness of the separator is within the range of 40 to 100µm on average.

19. A battery as claimed in Claim 18, wherein hydrophilic treatment is conducted on said separator by introducing a sulfonic group, or groups mainly composed of sulfur element and/or oxygen element to a non woven cloth mainly composed of polyolefin resin fiber.

20. A battery as claimed in either Claim 18 or claim 19, wherein most of the electrode surface is coated with electrolyte proof synthetic resin fine powders and/or that electrolyte proof synthetic resin is arranged on a surface of, or in the vicinity of at least one disconnected surface of an electrode.

21. A method of producing a battery using a non-sintered thin electrode,
wherein said non-sintered thin electrode is obtained by the steps comprising,
filling or coating a long conductive electrode substrate in a wide belt-like form with a paste of a mixed powder mainly composed of active materials or pseudo-active materials,
conducting a press work molding between metal rollers after drying, and
cutting the electrodes into a desired size; in which there is formed a battery containing an electrode group containing one or more positive electrodes and one or more negative electrodes together with a separator interposed therebetween, in which
(e) the positive electrode is mainly composed of nickel oxide and/or manganese oxide, and the negative electrode is mainly composed of a species selected from hydrogen absorbing alloy, cadmium, or zinc,
(f) the thickness of the positive electrode is within the range of 200 to 500µm on average,
(g) the thickness of the negative electrode is within the range of 100 to 300µm on average, and
(h) the thickness of the separator is within the range of 40 to 100µm on average.

22. A method as claimed in either Claim 21 or Claim 22, wherein said conductive electrode substrate in a wide belt-like form is obtained by making the substrate three dimensional by conducting a multiplicity of three dimensional concavities and convexities between dies in which both upper and lower parts can be engaged by conducting microscopic three dimensional process or through a similarly processed roller, thereafter annealing to prepare appropriate hardness.

23. A method as claimed in Claim 22, wherein the steps for obtaining said electrode comprises,
processing to make a part of a long conductive electrode substrate in a wide belt-like form with microscopic concavo-convex process conducted as a whole almost two dimensional by a press work operation beforehand,
filling or coating a long conductive electrode substrate in a wide belt-like form after said processing with a paste of a mixed powder mainly composed of active materials or pseudo-active materials,
conducting a press work molding between metal rollers after drying, followed by cutting the substrate into a desired size, thereby obtaining a non-sintered thin electrode;
said conductive electrode substrate in a wide belt-like form is obtained by making the substrate three dimensional by conducting a multiplicity of three dimensional concavities and convexities between dies in which both upper and lower parts can be engaged by conducting microscopic three dimensional process or through a similarly processed roller, thereafter annealing to prepare appropriate hardness;
an electrode group is a state in which single or plural of positive electrode and negative electrode are formed integrally interposing a separator therebetween in said battery ; the electrode group has
(e) materials of a positive electrode is mainly composed of nickel oxide and/or manganese oxide, and materials of a negative electrode is mainly composed of a species selected from hydrogen absorbing alloy, cadmium, or zinc,
(f) a thickness of a positive electrode is within the range of 200 to 500µm on average,
(g) a thickness of a negative electrode is within the range of 100 to 300µm on average, and
(h) a thickness of a separator is within the range of 40 to 100µm on average.
